(19) Europäisches Patentamt
European Patent Office
Office européen des brevets

(11) Veröffentlichungsnummer: **0 421 065 A2**

(12) **EUROPÄISCHE PATENTANMELDUNG**

(21) Anmeldenummer: **90113719.0**

(51) Int. Cl.5: **G01H 1/00**

(22) Anmeldetag: **18.07.90**

(30) Priorität: **30.09.89 DE 3932839**

(43) Veröffentlichungstag der Anmeldung:
**10.04.91 Patentblatt 91/15**

(84) Benannte Vertragsstaaten:
**BE DE ES FR GB IT SE**

(71) Anmelder: **Lehn, F. Heinrich, Dr.-Ing.**
**Mönsheimer Steige 9**
**W-7130 Mühlacker 6(DE)**

(72) Erfinder: **Lehn, F. Heinrich, Dr.-Ing.**
**Mönsheimer Steige 9**
**W-7130 Mühlacker 6(DE)**

(74) Vertreter: **Geitz, Heinrich, Dr.-Ing.**
**Postfach 2708 Kaiserstrasse 156**
**W-7500 Karlsruhe 1(DE)**

(54) **Verfahren und Vorrichtung zur Schwingungsüberwachung der Radsysteme von Kraftfahrzeugen während des Fahrbetriebs.**

(57) Im Fahrbetrieb eines Kraftfahrzeugs werden die in einer Parallelebene zur Fahrbahn und etwa rechtwinklig dazu auftretenden Beschleunigungen für jedes Fahrzeugrad gesondert ermittelt und in Signale umgewandelt sowie mit Hilfe gleichzeitig bestimmter Geschwindigkeitssignale Beschleunigungsspektren gebildet, die unter letzteren gebildeten Flächen durch Vergleich miteinander ausgewertet und beim Auftreten signifikanter Formabweichungen des Spektrums wenigstens eines Fahrzeugrades wird ein Signal zur Anzeige der Ursache für das ermittelte abnormale Schwingungsverhalten ausgelöst und angezeigt. Dafür sind jedem Fahrzeugrad je ein Sensor für horizontale und vertikale Beschleunigungen zugeordnet und es ist ein Signalgeber zur Bestimmung der Winkelgeschwindigkeit und der Winkelbeschleunigung an zumindest einem Fahrzeugrad vorgesehen. Ein zentraler Prozessor, dem eine Anzeigeeinrichtung nachgeschaltet ist, dient zum Verarbeiten der Signale getrennt nach den Radsystemen.

Fig. 1

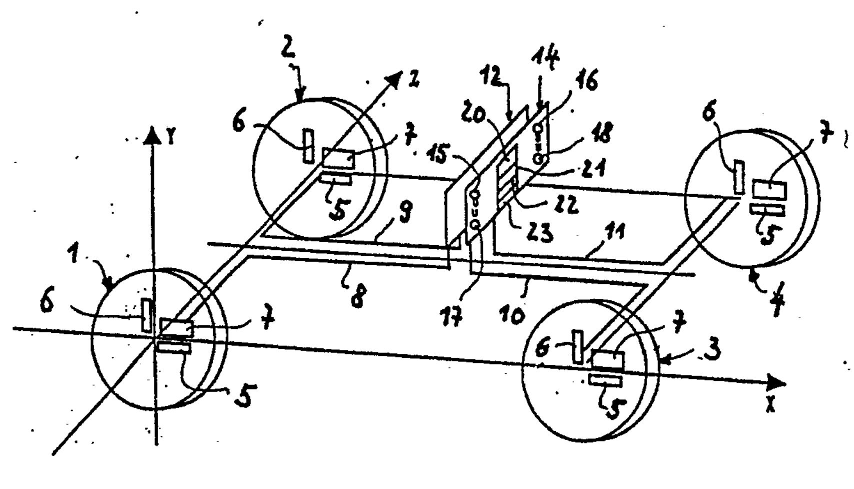


EP 0 421 065 A2

# VERFAHREN UND VORRICHTUNG ZUR SCHWINGUNGSÜBERWACHUNG DER RADSYSTEME VON KRAFTFAHRZEUGEN WÄHREND DES FAHRBETRIEBS

Bei Fahrwerken von Kraftfahrzeugen kann die Straßenhaftung der Fahrzeugräder durch Räderschwingungen gemindert werden, was empfindliche Beeinträchtigungen des Fahrkomforts und der Sicherheit nach sich zieht. Derartige Räderschwingungen können durch den Straßenzustand fremderregt oder infolge Reifenungleichförmigkeit und Reifenunwucht (Eigenerregungen) verursacht sein, die bei bestimmten Geschwindigkeiten zu Resonanzerscheinungen und verminderter Bodenhaftung führen können.

Neben der Auslegung des Fahrwerks bestimmen die Reifenungleichförmigkeit, der Wuchtzustand der umlaufenden Fahrzeugräder, der Reifenluftdruck und der Zustand der Stoß dämpfer das Fahrverhalten wesentlich. Veränderungen des Zustandes der Stoßdämpfer, des Reifenluftdrucks und der Reifengeometrie führen zu einer den Fahrkomfort und auch die Fahrsicherheit beeinträchtigenden Änderung des Fahrverhaltens. Insbesondere aber beeinträchtigen Änderungen des Wuchtzustandes der Fahrzeugräder die Straßenhaftung und damit die Fahrsicherheit. Eklatant werden derartige Beeinträchtigungen, wenn mehrere abnormale Zustände zusammentreffen, wie etwa eine unzulässig große Unwucht eines Rades und eine Funktionsstörung des diesem Rad zugeordneten Stoßdämpfers.

Die Räder von Kraftfahrzeugen werden im allgemeinen auf stationären Wuchtmaschinen ausgewuchtet, müssen aber wegen des Verschleißes der Reifen im Fahrbetrieb und nach jedem Reifenwechsel von Zeit zu Zeit nachgewuchtet werden. In der Regel geschieht auch dies auf stationären Auswuchtmaschinen.

Da die Radsysteme von Kraftfahrzeugen aus mehreren jeweils einzeln ausgewuchteten Teilen aufgebaut sind und sich aus den Toleranzen der Einzel-Restunwuchten unzulässig hohe System-Restunwuchten ergeben können, kommt auch das Finish-Balance-Verfahren zur Anwendung, bei dem die Fahrzeugräder im montierten Zustand in einer Ebene ausgewuchtet werden.

Bei diesem Verfahren, das bei der Fahrt auftretende fahrwerksbedingte Nichtlinearitäten nicht erfassen kann, muß im unterkritischen Bereich gewuchtet werden und die Dämpfung darf sich während des Wuchtvorganges nicht drehzahlabhängig verändern.

Das Wuchten im unterkritischen Bereich ist in aller Regel möglich, weil alle rotierenden Systemteile beim Herstellungsprozeß vorgewuchtet sind. Die Forderung hingegen, daß sich die Dämpfung mit der Raddrehzahl nicht ändern darf, ist insbesondere bei modernen Fahrwerken nicht erfüllt, weil derartige Fahrwerke in aller Regel so ausgelegt sind, daß eine drehzahlabhängige Änderung der Dämpfung eintritt.

Angesichts der gewollt drehzahlabhängigen Dämpfungsänderungen können bei modernen Fahrwerken mit dem gewöhnlichen Finish-Balance-Verfahren keine zuverlässigen Meßwerte ermittelt werden. Die mit diesem Verfahren ermittelten Positionsangaben festgestellter Unwuchten können mit erheblichen Winkelfehlern behaftet sein und es können auch zwei Lösungen auftreten. Der zutreffende Wert ist in solchen Fällen nur empirisch zu ermitteln.

Das gewöhnliche Finish-Balance-Verfahren erweist sich mithin bei modernen Fahrwerken als nur bedingt brauchbar. Dieses Verfahren ist aber auch insofern unzulänglich, als es nicht in der Lage ist, die fahrzeugtypische Schwingungscharakteristik des auszuwuchtenden Mehrmassen-Radsystems zu erfassen, also laufend Meßwerte mit Normwerten zu vergleichen.

Als Folge von Restunwuchten bei Fahrzeugrädern treten umlaufende Unwuchtvektoren auf, die eine Minderung der Straßenhaftung bewirken sowie zu Vibrationen im Fahrzeug und zu erhöhtem Reifenverschleiß führen. Unzulässig große Restunwuchten können beispielsweise durch den Verlust eines Unwuchtgewichtes oder auch durch partiell übermäßigen Abtrag von Belagmaterial an den Reifen eintreten, aber auch montagebedingt sein und mithin durchaus bei Neufahrzeugen vorkommen. Angesichts der nur bedingten Zuverlässigkeit der bei Anwendung des Finish-Balance-Verfahrens zu ermittelnden Meßwerte ist zu erwarten, daß derartige Restunwuchten nur im Fahrbetrieb beim Auftreten von Vibrationen feststellbar sind.

Eine weitere Ursache abnormaler Schwingungserscheinungen kann an einem einwandfrei ausgewuchteten Fahrzeugrad die Reifenungleichförmigkeit sein. Diese kann in Abweichungen der geometrischen Form oder Ungleichförmigkeiten des inneren Aufbaus, das heißt, Abweichungen der Federkonstanten, begründet sein.

Die Möglichkeiten der Messung von Reifenungleichförmigkeiten beschränken sich bislang auf stationäre Verfahren. Kraftfahrzeug-Werkstätten gelingt es nur in Ausnahmefällen, bei abnormalen Schwingungserscheinungen als Ursache die Reifenungleichförmigkeit von der Radunwucht zu unterscheiden.

Es ist bekannt, daß jeder Fahrzeugreifen Leckagen aufweist, und zwar an der Grenzstelle zwischen Felgenhorn und Reifen, am Ventil und durch die Reifenwandung. In Studien wurde nachgewiesen, daß etwa dreiviertel aller Kraftfahrzeuge mit zu geringem Reifen-Luftdruck fahren.

Daraus folgt, insbesondere bei höherem Beladungszustand, daß die Straßenlage sich zunehmend verschlechtert und der Reifen infolge stärkerer Walkarbeit und Erwärmung während der Fahrt zerstört werden kann. Die Veränderung des Reifen- Luftdrucks führt immer zu einer Veränderung der Reifenfederkonstanten und zu abnormalen Schwingungserscheinungen.

Das Nachlassen der Stoßdämpfer-Funktion kann auf geeignetem Werkstatt-Prüfständern kontrolliert werden. Dem Fahrer macht sich eine Abweichung vom Normalzustand nicht ohne weiteres bemerkbar. Ein defekter Stoßdämpfer führt jedoch immer zu abnormalem Schwingungsverhalten des betreffenden Rades und damit zu einer Verminderung der Bodenhaftung sowie zu einer Einschränkung der Fahrzeugsicherheit.

Diesem gleichermaßen für die Hersteller und Halter von Kraftfahrzeugen unbefriedigenden Zustand soll durch die Erfindung abgeholfen werden.

Gelöst ist diese Aufgabe durch die Schaffung eines Verfahrens - und einer der Verfahrensdurchführung dienenden Vorrichtung -zur Schwingungsüberwachung der Radsysteme von Kraftfahrzeugen während des Fahrbetriebs, bei dem aufeinanderfolgend die nachstehend angegebenen Verfahrensschritte durchgeführt werden:

-Die in einer Parallelebene zur Fahrbahn (X-Richtung) und etwa senkrecht dazu (Y-Richtung) auftretenden Beschleunigungen werden für jedes Fahrzeugrad gesondert ermittelt,

-die in X- und Y-Richtung während einer vorbestimmten Zeitdauer t (Meßphase) ermittelten Beschleunigungswerte der einzelnen Räder werden in Signale umgewandelt und mit Hilfe gleichzeitig bestimmter Geschwindigkeitssignale Beschleunigungsspektren gebildet,

-die unter den Beschleunigungsspektren der einzelnen Fahrzeugräder in X- und Y-Richtung gebildeten Flächen werden durch Vergleich miteinander ausgewertet und

- beim Auftreten signifikanter Abweichungen von vorgegebenen Normwerten an wenigstens einem Fahrzeugrad wird ein Signal zur Anzeige der Ursache für das ermittelte abnormale Schwingungsverhalten ausgelöst und zur Anzeige gebracht.

Damit ist ein alle relevanten Einflußgrößen erfassendes Verfahren zur Schwingungsüberwachung der Radsysteme von Kraftfahrzeugen während des Fahrbetriebs geschaffen.

Die Erfindung geht aus von der Überlegung, daß signifikante Abweichungen des Schwingungsverhaltens zumindest eines Fahrzeugrades von einem vorgegebenen oder mit Hilfe eines selbstlernenden elektronischen Signal-Verarbeitungssystem ermittelten Normzustand ein Indiz für eine oder mehrere mögliche Schwingungsursachen sind, die deshalb der Analyse bedürfen. Neben dem Straßenzustand kommen als Ursachen für Schwingungen Reifenungleichförmigkeit und Reifenunwucht in Betracht, ferner defekte Stoßdämpfer und von der Norm abweichender Reifenluftdruck.

Zwar ist die Überprüfung der Stoßdämpferfunktion durch Messung des Schwingungsverhaltens der Stoßdämpfer auf speziellen Prüfständen allgemein bekannt, nicht aber die laufende Stoßdämpferüberprüfung während des Fahrbetriebs. Auch der Reifenluftdruck kann im allgemeinen nur stationär gemessen und korrigiert werden. Zwar ist auch die Messung des Reifenluftdrucks beim Fahrbetrieb mit Hilfe von Druckmeßdosen in der Felge und einer berührungslosen (induktiven) Signalübertragung ebenso schon bekannt wie die bei Sonderfahrzeugen gelegentlich angewendete direkte Luftdruckmessung und Luftdruck-Korrektur über die Fahrzeugachse, aber diese Arten der Luftdruckmessung und Korrektur bei laufendem Fahrbetrieb sind äußerst aufwendig und für die Anwendung bei Serienfahrzeugen ungeeignet. Erst das erfindungsgemäße Verfahren ermöglicht eine laufende Erfassung all dieser Parameter während des Fahrbetriebs, einschließlich beispielsweise verschleißbedingt auftretender Reifenungleichförmigkeiten.

Angesichts der Notwendigkeit, beim laufenden Fahrbetrieb das gesamte Einflußspektrum der Schwingungen an jedem Fahrzeugrad zu analysieren, wurde durch die Erfindung ein Verfahren geschaffen, das es gestattet, die einzelnen Ursachen zu unterscheiden und differenziert anzuzeigen. Die Diagnose der an einem Kraftfahrzeugrad auftretenden Schwingungen ist eine partielle und sektionale Analyse der einzelnen Schwingungsformen; d.h., partiell in bestimmten Frequenzbereichen und sektional bei bestimmten Fahrzeugzuständen und Fahrbedingungen. Dabei sind die Schwingungen, die aus einzelnen Ursachen hervorgerufen werden, von einander zu trennen und die Bereiche, in denen man Rückschlüsse auf abnormale, etwa verschleißbedingte, Ursachen treffen will, zu definieren. Dies bedeutet, daß die Schwingungs-Diagnose nach einer bestimmten Strategie zu erfolgen hat.

Naturgemäß setzt dies die Kenntnis des Normzustandes voraus. Dieser kann entweder im einzelnen ermittelt und in elektronischen Speichermedien abgespeichert werden, oder der Normzustand wird nach objektiven, oder auch subjektiven, Kriterien als selbstlernendes System vom Fahrzeug in seinem Anfangszustand vorgegeben und abgespeichert. Als Ausgangszustand könnte z.B. der fabrik-neue Zustand gelten.

Bei der Analyse der Radschwingungen hat man davon auszugehen, daß der Reifen eines ausgewuchteten Fahrzeugrades aufgrund seiner Ungleichförmigkeit Schwingungen erzeugt. Eine Abweichung der davon entstehenden Schwingungsspektren beispielsweise in Y-Richtung (Radlast) von vorgegebenen Normspektren läßt auf eine möglicherweise unzulässige Reifenungleichförmigkeit schließen. Die durch Reifenungleichförmigkeit verursachten Schwingungen treten im wesentlichen in Y-Richtung auf und sind damit von Unwuchtschwingungen zu unterscheiden, die in X-Richtung und in Y-Richtung auftreten.

Unwuchten der Fahrzeugräder sind als Überhöhung in den Spektren der horizontalen und vertikalen Beschleunigung zu erkennen, das heißt Amplituden-Spitzen, die mit der Raddrehfrequenz auftreten, und zwar umso besser je schneller das Fahrzeug fährt.

Ein Nachlassen der Dämpferfunktion führt immer zu mehr Vibrationen. Diese Erscheinung ist daran zu erkennen, daß die Fläche unter der jeweiligen Spektrallinie umso größer ist, je mehr die Dämpferfunktion nachläßt.

Ein Nachlassen des Reifen-Luftdrucks hingegen führt immer zu weniger Vibrationen. Je geringer der Reifen-Luftdruck wird, umso kleiner ist die Fläche unter der jeweiligen Spektrum-Linie.

Der Einfluß einer schlechten Fahrbahn ist immer in Form stark überhöhter Vibrationen an allen Fahrzeugrädern zu erkennen. Allein daraus läßt sich folgern, daß eine Vibrationsdiagnose der einzelnen Räder bei schlechter Straße nicht sinnvoll ist.

Für die Strategie der Vibrationsdiagnose der Kraftfahrzeugräder kann die Bedeutung der einzelnen Parameter in Bezug auf die Meßgrößen in X-Richtung (Umfangskraft) und Y-Richtung (Radlast) anhand einer Einflußmatrix wie folgt dargestellt werden:

| Parameter | Auswirkungen auf die Vibrationen der | |
|---|---|---|
| | Radlast | Umfangskraft |
| Rad-Winkelbeschleunigung | groß | groß |
| Fahrgeschwindigkeit | groß | groß |
| Belastungszustand | gering | gering |
| Schräglaufwinkel | gering | gering |

Der Einfluß positiver oder negativer Rad-Winkelbeschleunigungen führt zu Verfälschungen der Diagnose-Ergebnisse. Dieser Fahrzustand ist daher für die Gewinnung aussagefähiger Meßergebnisse ebenso ungeeignet wie die Fahrt auf schlechten Fahrbahnen.

Demgemäß sieht eine Weiterbildung der Erfindung ein Verfahren vor, bei dem zeitgleich mit der Ermittlung der Beschleunigungswerte der einzelnen Fahrzeugräder in X- und Y-Richtung das Auftreten von Winkelbeschleunigungen während der jeweiligen Meßphase überprüft wird und nur dann die den in X- und Y-Richtung ermittelten Beschleunigungswerten entsprechenden Signale zur Bildung von Beschleunigungsspektren, welche die Umfangskraft und Radlast des jeweiligen Fahrzeugrades charakterisieren, herangezogen werden, wenn etwaig ermittelte Winkelbe schleunigungen unter einer vorgesehenen Toleranzgrenze liegen.

Eine andere Ausgestaltung sieht vor, daß die in X- und Y-Richtung ermittelten Beschleunigungswerte der einzelnen Fahrzeugräder miteinander verglichen und die diesen Beschleunigungswerten entsprechenden Signale zur Bildung von Beschleunigungsspektren, die Umfangskraft und Radlast eines jeden Fahrzeugrades charakterisieren, herangezogen sowie einer Auswertung unterworfen werden, wenn die Beschleunigungswerte wenigstens eines Fahrzeugrades sich von den Beschleunigungswerten der anderen Fahrzeugräder signifikant unterscheiden.

Gleichfalls nach einer sinnvollen Verfahrensausgestaltung werden im Falle des Auftretens von Winkelbeschleunigungen während der jeweiligen Meßphase und/oder dem Fehlen signifikanter Unterschiede zwischen den Beschleunigungswerten der Fahrzeugräder die ermittelten Beschleunigungswerte für jedes Fahrzeugrad gesondert in einem Langzeitspeicher abgespeichert. Diese Daten können für eine Langzeitstatistik und damit zur Beurteilung des Schwingungsverhaltens der Fahrzeugräder herangezogen werden, um zu einer quantitativen Beurteilung über Störungsursachen zu gelangen.

Unter Berücksichtigung dieser Ausgestaltungen ist das erfindungsgemäße Verfahren zur Überwachung und Analyse der in den einzelnen Radsystemen auftretenden Schwingungen sowie zur Anzeige der Schwingungsursachen nach folgendem Schema durchzuführen:

- Messung der in X- und Y-Richtung auftretenden Beschleunigungen an allen Fahrzeugrädern,
- Abfrage: treten während der Meßdauer Winkelbeschleunigungen - oberhalb eines bestimmten Toleranzbereiches zum Beispiel beim Beschleunigen oder Abbremsen auf, wenn nein - weitere Auswertung

wenn ja - neue Messung,
- Abfrage: sind die Vibrationen an allen Rädern - innerhalb eines vorgegebenen Toleranzbereichs zum Beispiel bei einer schlechten Straße - gleich stark?
- wenn nein - weitere Auswertung,
- wenn ja - neue Messung,
- Umwandlung der Beschleunigungswerte (X-/Y-Richtung) und Bildung von Flächen unter den Beschleunigungsspektren mit Hilfe gleichzeitig bestimmter Geschwindigkeitssignale,
- Auswertung der Flächen unter den Beschleunigungsspektren in X- und Y-Richtung sowie Vergleich der Flächen untereinander,
- Überprüfung der einzelnen Räder nach Unwuchten mit Hilfe der Beschleunigungskomponenten in X- und Y-Richtung,
- Einspeichern der laufend ermittelten Meßdaten in einen Langzeitspeicher zur nachfolgenden Auswertung,
- Überprüfen des Langzeitspeichers auf Eigenfrequenzwerte,
- Auswertung der Meßdaten und im Falle abnormalen Schwingungsverhaltens eines Fahrzeugrades Auslösen eines Anzeigesignals für dieses Fahrzeugrad,
- Anzeige der Ursache für das abnormale Schwingungsverhalten (Unwucht, Stoßdämpfer, Reifenluftdruck, Reifenungleichförmigkeit).

Die aus Abweichungen vom Normalzustand, wie Unwuchten, Randungleichförmigkeiten, defekten Stoßdämpfern oder falschem Luftdruck, resultierenden Schwingungen sind mittels des vorstehend erläuterten Verfahrens gut erfaßbar. Problematisch hingegen ist die präzise Erkennung der Schwingungen, die auf der gegenseitigen Beeinflussung der (rechts/links) benachbarten Räder beruhen und aus etwaigen Taumelbewegungen der Räder entstehen. Insoweit schafft eine Ausgestaltung des erfindungsgemäßen Verfahrens dergestalt Abhilfe, daß neben den im Fahrbetrieb in einer zur Fahrbahn parallelen Ebene in Fahrtrichtung (X-Richtung) und etwa rechtwinklig dazu vertikal (Y-Richtung) auftretenden Beschleunigungen auch die Beschleunigungen in einer Parallelebene zur Fahrbahn quer zur Fahrtrichtung (Z-Richtung) für jedes Fahrzeugrad gesondert ermittelt, die insoweit während einer vorbestimmten Zeitdauer ermittelten Beschleunigungswerte der einzelnen Fahrzeugräder in Signale umgewandelt und mit Hilfe gleichzeitig bestimmter Geschwindigkeitssignale Beschleunigungsspektren gebildet sowie die unter den Beschleunigungsspektren der einzelnen Fahrzeugräder in X-, Y-und Z-Richtung gebildeten Flächen durch Vergleich miteinander ausgewertet und daß beim Auftreten signifikanter Abweichungen an wenigstens einem Fahrzeugrad ein Signal zur Anzeige der Ursache für das ermittelte abnormale Schwingungsverhalten ausgelöst und zur Anzeige gebracht wird.

Gemäß einer Weiterbildung dieser Verfahrensausgestaltung erfolgt zweckmäßigerweise die Auswertung der in den einzelnen Rädern in X-, Y- und Z-Richtung ermittelten Beschleunigungsspektren durch Vergleich der von diesen Spektren gebildeten Flächen mittels einer Suchmatrix

$$\begin{pmatrix} Q_1 \\ Q_2 \\ Q_3 \\ Q_4 \end{pmatrix} = \begin{pmatrix} q_{11}=1 & q_{12} & q_{13} & q_{14} \\ q_{21} & q_{22}=1 & q_{23} & q_{24} \\ q_{31} & q_{32} & q_{33}=1 & q_{34} \\ q_{41} & q_{42} & q_{43} & q_{44}=1 \end{pmatrix},$$

wobei $q_{ik} = A_i/A_k$ die Quotienten der Flächen $A_i$, $A_k$ der an den Rädern i, k in jeweils einer Richtung ermittelten Beschleunigungsspektren bedeuten und ein durch Verkleinerung der Fläche $A_i$ eines Rades i im Verhältnis zur entsprechenden Fläche eines Rades k angezeigte Abfall der Schwingungsstärke des erstgenannten Rades zu Quotienten $q_{ik} = A_i / A_k < 1$ und $q_{ki} = A_k / A_i > 1$ und damit zu einer Aussage über die Ursache über den Abfall der Schwingungsstärke am Rad im Verhältnis zum Rad k führt.

Durch die genannte Quotientenbildung gelingt somit eine qualitative Aussage über die Ursache für an dem einen oder anderen Fahrzeugrad auftretende Änderung der durch die Flächen der jeweiligen Schwingungsspektren repräsentierten Schwingungsstärke. Dabei kann die Auswertung der an den einzelnen Rädern in X-, Y- und Z-Richtung ermittelten Beschleunigungsspektren auch durch Vergleich signifikanter Teilflächen der Spektren mittels einer aus Quotienten dieser Teilflächen gebildeten Suchmatrix erfolgen und selbstverständlich ist dieses Suchverfahren auch für andere Kriterien anwendbar, wie z.B. die Häufigkeitsanalyse zur Erkennung von Unwuchten.

Es ist somit daraus, welche Spalten oder Zeilen der Suchmatrix > oder < 1 sind, zu erkennen, welches Schwingungssignal vom Normalzustand abweicht.

Eine für die Durchführung des zuerst erläuterten Verfahrens geeignete und bestimmte Vorrichtung ist dadurch gekennzeichnet, daß im Bereich der Lagerung und/oder Aufhängung eines jeden Fahrzeugrades je ein Sensor für die Aufnahme auftretender Beschleunigungen in horizontaler (X) und vertikaler (Y) Richtung angeordnet sind, daß ein Signalgeber zur Bestimmung der Winkelgeschwindigkeit und der Winkelbeschleunigung an zumindest einem Fahrzeugrad vorhanden ist und daß zum Verarbeiten und gegebenenfalls Speichern der von den Sensoren kommenden und über geeignete Leitungsverbindungen zugeführten Signale, und zwar getrennt nach Radsystemen und in X- und Y-Richtung auftretenden Beschleunigungen, ein Prozessor vorgesehen und diesem Prozessor eine Anzeigeeinrichtung mit einer Anzeige für jedes Radsystem und je eine Fehleranzeige für jede überwachte Funktion nachgeschaltet ist.

Für die Verwirklichung des zuletzt genannten Verfahrens bedarf es hingegen einer Weiterbildung der Vorrichtung dergestalt, daß im Bereich der Lagerung und/oder Radaufhängung eines jeden Fahrzeugrades neben je einem Sensor für die Aufnahme auftretender Beschleunigungen in Fahrtrichtung (X-Richtung) und vertikal dazu (Y-Richtung) ein Beschleunigungen in einer Parallelebene zur Fahrbahn und quer zur Fahrtrichtung(Z-Richtung erfassender Sensor angeordnet und ein Prozessor zum Verarbeiten der Signale getrennt nach Radsystem und in X-, Y- und Z-Richtung auftretenden Beschleunigungen vorgesehen und diesem Prozessor eine Anzeigeeinrichtung mit einer Anzeige für jedes Radsystem und je eine Fehleranzeige für jede überwachte Funktion nachgeschaltet ist.

Eine so ausgebildete Vorrichtung ermöglicht es, während des Fahrbetriebs das Schwingungsverhalten der Radsysteme sowie die Funktion und den Zustand der für dieses Schwingungsverhalten maßgeblichen Systemkomponenten laufend zu überwachen und etwaige Abweichungen von vorgegebenen Normzuständen an einem oder mehreren Radsystemen für dieses bzw. diese zur Anzeige zu bringen sowie die für das abnormale Schwingungsverhalten maßgebliche Ursache anzuzeigen. Der Fahrer eines mit einer derartigen Vorrichtung ausgerüsteten Fahrzeugs wird somit unverzüglich nach dem Auftreten von Normabweichungen über letztere unterrichtet und vor sich anbahnenden Sicherheitsrisiken gewarnt.

Anhand der beigefügten Zeichnungen sollen nachstehend eine Ausführungsform einer Vorrichtung zur Schwingungsüberwachung der Radsysteme von Kraftfahrzeugen während des Fahrbetriebs und das damit durchführbare Verfahren erläutert werden. In schematischen Ansichten zeigen:

Fig. 1 in einer perspektivischen Ansicht ein Kraftfahrzeug mit den einzelnen Fahrzeugrädern zugeordneten Sensoren zum Ermitteln horizontaler (in Fahrtrichtung) und vertikaler Beschleunigungen sowie der Fahrzeuggeschwindigkeit im Fahrbetrieb,

Fig. 2 in einer Ansicht wie Fig. 1 ein Fahrzeug, bei dem den einzelnen Fahrzeugrädern zusätzlich Sensoren zum Ermitteln von Beschleunigungen in einer zur Fahrbahnebene parallelen Ebene und quer zur Fahrtrichtung zugeordnet, aber die Geschwindigkeitssignalgeber, der zentrale Mikroprozessor und die Mittel zur Signalanzeige weggelassen sind,

Fig. 3 in einer schematischen Darstellung ein Fahrzeugrad mit angedeuteten Wirkungslinien und Wirkebenen als Haupteinflußzonen und letzteren zugeordneten Sensoren zum Erfassen der im Fahrbetrieb auftretenden Beschleunigungen in Fahrtrichtung, vertikal und quer dazu,

Fig. 4 ein Fahrzeugrad mit den Radführungsmittel in einer perspektivischen Ansicht und mit an den Radführungsmitteln angeordneten Sensoren,

Fig. 5 ein Spektrum der bei verschiedenen Fahrgeschwindigkeiten in Abhängigkeit von der Frequenz an einem Fahrzeugrad auftretenden Umfangskräfte bei normaler Straße und normaler Reifenungleichförmigkeit,

Fig. 6 ein Spektrum der bei verschiedenen Fahrgeschwindigkeiten in Abhängigkeit von der Frequenz an einem Fahrzeugrad auftretenden Radlasten bei normaler Straße und normaler Reifenungleichförmigkeit,

Fig. 7 die Überhöhung des Spektrums der Schwingungen an dem Radlager eines Fahrzeugrades bei einer vorgegebenen Fahrgeschwindigkeit und unterschiedlichen Unwuchten in Abhängigkeit von der Frequenz,

Fig. 8 die Überhöhung des Spektrums der Schwingungen an einem Radlager eines Fahrzeugrades bei einer vorgegebenen Fahrgeschwindigkeit und unterschiedlichen Beeinträchtigungen der Funktion des zugeordneten Stoßdämpfers in Abhängigkeit von der Frequenz,

Fig. 9 die Überhöhung des Spektrums der Schwingungen an einem Radlager eines Fahrzeugrades bei einer vorgegebenen Fahrgeschwindigkeit und unterschiedlichem Reifen-Luftdruck in Abhängigkeit von der Frequenz,

Fig. 10 ein Flußschaubild zur Verdeutlichung des Verfahrens zur laufenden Überwachung der an den Radsystemen eines Fahrzeugs auftretenden Schwingungen und zur Analyse der Schwingungsursachen bei normalem Schwingungsverhalten.

Bei dem in Fig. 1 schematisch angedeuteten Kraftfahrzeug ist an der Radlagerung eines jeden Fahrzeugrades 1, 2 und 3, 4 je ein Sensor 5 für die Ermittlung horizontaler und ein Sensor 6 für die Ermittlung vertikaler Beschleunigungen sowie ein Geschwindigkeitssignalgeber 7 angeordnet. Die Sensoren 5, 6 und der Geschwindigkeitssignalgeber 7 stehen über Leitungen 8, 9 und 10, 11 mit einem zentralen Prozessor 12 in Verbindung, der über die Leitungen 8, 9 und 10, 11 mit dem zentralen Prozessor 12 in Verbindung, der zur Sammlung und Auswertung der von den einzelnen Fahrzeugrädern 1, 2, 3, 4 kommenden Signale dient. Dem zentralen Prozessor 12 sind ein Display 14 mit Leuchtdioden 15, 16 und 17, 18 für die einzelnen Fahrzeugräder und Anzeigen 20, 21, 22, 23 für Reifenluftdruck, Reifenungleichförmigkeit, Unwucht und Dämpfer nachgeschaltet.

Im übrigen ist in Fig. 1 ein räumliches Koordinatensystem mit den Koordinaten X, Y und Z eingezeichnet, dessen Ursprung im Radlager des Fahrzeugrades 1 (links vorn) liegt. Die X-Achse des Koordinatensystems erstreckt sich horizontal in Fahrzeuglängsrichtung und die Y-Achse vertikal, während die Z-Achse horizontal quer zur Fahrzeuglängserstreckung verläuft. Bezogen auf dieses Koordinatensystem wirken an den Fahrzeugrädern auftretende Umfangskräfte in X-Richtung, hingegen die Radlasten in Y-Richtung.

In Fig. 2 sind für gleiche Teile wie in Fig. 1 die gleichen Bezugszeichen verwendet und ebenfalls die Koordinaten X, Y, Z eines räumlichen Koordinatensystems eingezeichnet, dessen Ursprung wiederum im Radlager des Fahrzeugrades 1 (links vorn) liegt. Neben den Sensoren 5 für die Ermittlung der in Fahrtrichtung horizontal (X-Richtung) und den Sensoren 6 für die Ermittlung der in vertikaler Richtung (Y-Richtung) auftretenden Beschleunigungen ist jedem Radlager ein Sensor 25 zum Ermitteln der in einer Parallelebene zur Fahrbahn quer zur Fahrtrichtung (Z-Richtung) zugeordnet, und zwar in einer über den von den Radachsen aufgespannten Ebene, die durch die transformierte Koordinaten $Z_1'$, $Z_2'$ angedeutet ist. Mittels der diesen Koordinaten $Z_1'$, $Z_2'$ zugeordneten Sensoren 25 gelingt die Erfassung der aus der gegenseitigen Beeinflussung und/oder aus Taumelbewegungen der Räder resultierenden Schwingungen.

In Fig. 3 versinnbildlicht die mit $X'$ bezeichnete Wirkebene die Fahrbahn. Das räumliche Koordinatensystem X, Y, Z hat seinen Ursprung im nur angedeuteten Radlager 30. Die Sensoren 5, 6 zum Erfassen der in Fahrtrichtung und vertikal dazu auftretenden Beschleunigungen sind den X- und Y- Koordinaten zugeordnet, hingegen der Sensor 25 zum Erfassen der aus gegenseitigen Beeinflussungen oder Taumelbewegungen der Fahrzeugräder herrührenden Schwingungen einer transformierten Koordinate $Z'$, die sich parallel über der vom Radlager und den Koordinaten X, Z aufgespannten Ebene erstreckt.

Fig. 4 veranschaulicht die Übertragung des aus Fig. 3 ersichtlichen Prinzips anhand eines zusammen mit der Radaufhängung schematisch veranschaulichten Fahrzeugrades, wobei das mit seinem Ursprung im Radlager 30 liegende räumliche Koordinatensystem mit den Koordinaten X, Y und Z und auch die gegenüber der Z-Koordinate transformierte Koordinate $Z'$ angedeutet sind. Die Sensoren 5, 6 für die Erfassung der in Fahrtrichtung und vertikal dazu auftretenden Beschleunigungen sind jeweils auf der X-bzw. Y-Koordinate liegend am Radlager 30 angebracht, hingegen der Sensor 25 zum Erfassen der quer zur Fahrtrichtung auftretenden Beschleunigungen an einem Radlenker 31 und in der durch die transformierte Koordinate $Z'$ bezeichneten Parallelebene zur Fahrbahn. Die übrigen aus Fig. 4 ersichtlichen Radführungsmittel sowie der Stoßdämpfer und die Schraubenfeder interessieren hier nicht.

In Fig. 5 ist das Spektrum der bei verschiedenen Fahrgeschwindigkeiten bei normaler Straße und normaler Reifenungleichförmigkeit in horizontaler Richtung auftretenden Schwingungen eines ausgewuchteten Rades über der Frequenz aufgetragen, und zwar für Fahrgeschwindigkeiten von 50km/h bis 200km/h jeweils in Stufen von 25km/h steigend. Es ist ersichtlich, daß nur den Schwingungen erster bis dritter Ordnung für die in X-Richtung wirkenden Umfangskräfte Bedeutung zukommt. Ausgehend von kleinen Werten bei niedriger Fahrgeschwindigkeit steigen die Schwingungen erster Ordnung mit zunehmender Fahrgeschwindigkeit steil an. Demgegenüber weisen die Schwingungen zweiter Ordnung bei kleinen Fahrgeschwindigkeiten sehr niedrige Anfangswerte und mit zunehmender Fahrgeschwindigkeit auch einen im Vergleich zu den Schwingungen erster Ordnung nur mäßigen Anstieg auf. Den Schwingungen dritter Ordnung kommt nur bei hohen Fahrgeschwindigkeiten Bedeutung zu.

Analog zu Fig. 5 zeigt Fig. 6 das Spektrum der bei verschiedenen Fahrgeschwindigkeiten in vertikaler Richtung auftretenden Schwingungen eines ausgewuchteten Rades bei normaler Straße und normaler Reifenungleichförmigkeit über der Frequenz, und zwar wiederum für Fahrgeschwindigkeiten von 50km/h bis 200km/h jeweils in Stufen um 25km/h ansteigend. Auch für die durch dieses Spektrum repräsentierten Radlasten sind nur die Schwingungen erster bis dritter Ordnung beachtlich. Im Gegensatz zu dem die Umfangskräfte repräsentierenden Spektrum erster Ordnung in Fig. 5 haben die Schwingungen erster Ordnung in Fig. 6 bei niedrigen Fahrgeschwin digkeiten bereits beachtliche Werte und nehmen mit steigender Fahrgeschwindigkeit zunächst ab, um dann bei sehr hohen Fahrgeschwindigkeiten steil anzusteigen. Die Spektren zweiter und dritter Ordnung zeigen hingegen einen ähnlichen Verlauf wie die entsprechenden Spektren der Umfangskräfte.

Während die Fig. 5 und 6 Spektren der Umfangskräfte (X-Richtung) und der Radlasten (Y-Richtung) eines ausgewuchteten Fahrzeugrades bei normaler Straße und normaler Reifenungleichförmigkeit veranschaulichen, zeigt Fig. 7 den Einfluß zusätzlicher Unwuchten am Fahrzeugrad. Derartige Unwuchten sind als Überhöhung im Spektrum der vertikalen und horizontalen Beschleunigungen des Radlagers zu erkennen. Man sieht, daß die Überhöhung etwa proportional mit der Zunahme der Unwucht ansteigt. Fig. 7 zeigt diese Überhöhungen für eine vorbestimmte Fahrgeschwindigkeit. Versuche haben erwartungsgemäß bestätigt, daß mit steigender Fahrgeschwindigkeit die unwuchtbedingten Überhöhungen stark anwachsen.

Fig. 8 veranschaulicht den Einfluß der Dämpferfunktion. Die Überhöhungen treten etwa im gleichen Frequenzbereich wie die unwuchtbedingten Überhöhungen ein und zeigen mit fortschreitender Abnahme der Dämpferfunktion einen beachtlichen Anstieg. Folglich ist die jeweilige Fläche unter der Spektrumlinie umso größer, je mehr die Dämpferfunktion nachläßt.

Die Abnahme des Reifenluftdrucks hingegen führt immer zu weniger Vibration und demgemäß wird die Fläche unter der Spektrumlinie umso kleiner, je geringer der Reifenluftdruck ist.

Fig. 9 zeigt, daß bei steigendem Reifenluftdruck und im übrigen unveränderten Fahrbedingungen die luftdruckabhängigen Überhöhungen ansteigen.

Bei der Überprüfung des Schwingungsverhaltens der Radsysteme werden in Meßintervallen von beispielsweise fünf Sekunden die an den einzelnen Radsystemen auftretenden Beschleunigungen $X''$ in horizontaler Richtung und $Y''$ in vertikaler Richtung ermittelt. Wenn während der Meßphase Rad-Winkelbeschleunigungen infolge Änderung der Fahrgeschwindigkeit aufgetreten sind, die einen vorbestimmten Toleranzbereich überschreiten, werden die bei der Messung gewonnenen Daten in einem Langzeitspeicher zwecks Erstellung einer Langzeitstatistik abgespeichert und es erfolgt eine erneute Messung der in X- und Y-Richtung an den Radsystemen auftretenden Beschleunigungen $X''$, $Y''$, die bei Abwesenheit von Rad-Winkelbeschleunigungen während der Meßphase dann einer Analyse zum Erkennen der Schwingungsursachen unterworfen werden. Dabei erfolgt zunächst eine Beurteilung der einzelnen Fahrzeugräder und nachfolgend die Ermittlung der für abnormales Schwingungsverhalten eines Radsystems maßgeblichen Ursache. Die laufende Überwachung und Analyse des Schwingungsverhalten der Radsysteme veranschaulicht schematisch Fig. 10.

Bei der praktischen Durchführung des Verfahrens werden mittels Beschleunigungssensoren an allen vier Fahrzeugrädern die in Y-Richtung und in X-Richtung auftretenden Beschleunigungen sowie die Winkelgeschwindigkeit und Winkelbeschleunigung an mindestens einem Fahrzeugrad gemessen und die gewonnenen Meßsignale an den Zentralprozessor weitergeleitet und dort in bestimmten zeitlich begrenzten Intervallen oder in kontinuierlichem Betrieb nach zum Beispiel folgendem Schema ausgewertet:

1. Abfrage:

Sind während der jeweiligen Meßphase Änderungen der Winkel geschwindigkeit eingetreten, die einen bestimmten Toleranzbereich überschreiten?
Wenn ja, neue Messung zur Gewinnung von Signalen ohne Verfälschung durch Winkelbeschleunigungen.
Wenn nein, Weiterverarbeitung und Auswertung der Meßsignale.

2. Abfrage:

Haben alle vier Räder eine etwa gleich starke, über einer definierten Toleranzgrenze liegende Vibration?
Wenn ja, Rückschluß auf schlechte Straße und Befehl, keine Einzelradauswertung vorzunehmen.

3. Abfrage:

Haben zwei hintereinanderliegende Räder etwa gleich starke, über einer definierten Toleranzgrenze liegende Vibration?
Wenn ja, Rückschluß auf schlechten Fahrbahn-Randstreifen und Befehl, keine Einzelradauswertung vorzunehmen.

4. Abfrage:

Haben ein oder alle vier Räder eine über einer definierten Toleranzgrenze liegende positive oder negative Winkelbeschleunigung?
Wenn ja, Rückschluß auf verfälschende Einflüsse und Befehl, keine Einzelradauswertung vorzunehmen.

5. Abfrage:

Gibt es ausgeprägte Schwingungen erster Ordnung in Y-Richtung bei jeder Fahrgeschwindigkeit an einem oder mehreren Rädern, die außerhalb eines definierten Toleranzbereiches liegen?
Wenn ja, Rückschluß auf unzulässig hohe Reifenungleichförmigkeit: Sammeln im Speicher und Anzeige am Display.

6. Abfrage:

Befindet sich die Fahrgeschwindigkeit des Fahrzeuges im Eigenfrequenzbereich des Radsystemes zum Beispiel zwischen 80 km/h und 120 km/h und treten in diesem Bereich ausgeprägte Schwingungen in X-Richtung und Y-Richtung auf, die oberhalb eines definierten Toleranzbereiches liegen?
Wenn ja, dann Rückschluß auf unzulässig hohe statische Unwucht: Sammeln im Speicher und Anzeige am Display.

7. Abfrage:

Befindet sich die Fahrgeschwindigkeit des Fahrzeuges im Eigenfrequenzbereich des Radsystems, zum Beispiel zwischen 80 km/h und 120 km/h und zeigt die Fläche unter der Spektrallinie eine mehr oder weniger starke Überhöhung an, aus der geschlossen werden kann, daß zum Beispiel die Reifen-Eigenfrequenz unter 12 hz oder über 14 hz liegt, so ist dies ein Hinweis dafür, daß (bei 12 hz) der Luftdruck niedrig oder (bei 14 hz) der Luftdruck hoch ist. Zur Anzeige eines unzulässigen Luftdrucks am Display sind fahrzeug- und reifenspezifisch Toleranzgrenzen festzulegen.

8. Abfrage:

Durch einen Kreuzvergleich der einzelnen Räder mit den in einem Langzeitspeicher gesammelten charakteristischen Daten und Flächen unter den Spektrallinien läßt sich zunächst feststellen, welches Rad defekt ist. Nach dieser Feststellung läßt sich bestimmen, ob das Rad eine zu starke Reifenungleichförmigkeit hat (Abfrage 5) oder ob es eine zu starke Unwucht hat (Abfrage 6). Aus dem Flächenvergleich der Abfrage 7 und der Veränderung der Fahrwerkseigenfrequenz läßt sich beurteilen, ob an dem defekten Rad der Reifen zu wenig Luftdruck hat oder ob der Dämpfer defekt ist.

Eine begrenzte Anzahl von zum Beispiel fünfzig gemessenen Ereignissen wird mit Hilfe einer Langzeitstatistik gespeichert, ausgewertet, abgefragt und gegebenenfalls als Sammelergebnis angezeigt.

1. Abfrage:

Sind genügend Messungen gemacht worden?

2. Abfrage:

Wie oft wurden bestimmte Defekte gefunden? Liegen die Fehlermeldungen über einer bestimmten Anzahl, dann Anzeige am Display.

3. Abfrage:

Wie oft wurden sinnlose Signale gemeldet? Daraus Rückschluß auf Defekt des Diagnose-Systems; Anzeige am Display.

## Ansprüche

1. Verfahren zur Schwingungsüberwachung der Radsysteme, insbesondere von Kraftfahrzeugen während des Fahrbetriebs mit den nachstehenden, aufeinanderfolgenden Verfahrensschritten:
- die im Fahrbetrieb in einer Parallelebene zur Fahrbahn (X-Richtung) und etwa rechtwinklig dazu (Y-Richtung) auftretenden Beschleunigungen werden für jedes Fahrzeugrad gesondert ermittelt,
- die in X- und Y-Richtung während einer vorbestimmten Zeitdauer t ermittelten Beschleunigungswerte der einzelnen Fahrzeugräder werden in Signale umgewandelt und mit Hilfe gleichzeitig bestimmter Geschwindigkeitssignale Beschleunigungsspektren gebildet,
- die unter den Beschleunigungsspektren der einzelnen Fahrzeugräder in X- und Y-Richtung gebildeten Flächen werden durch Vergleich miteinander ausgewertet und
- beim Auftreten signifikanter Formabweichungen an wenigstens einem Fahrzeugrad wird ein Signal zur Anzeige der Ursache für das ermittelte abnormale Schwingungsverhalten ausgelöst und zur Anzeige gebracht.

2. Verfahren nach Anspruch 1 bei dem zeitgleich mit der Ermittlung der Beschleunigungswerte der einzelnen Fahrzeugräder in X- und Y-Richtung das Auftreten von Winkelbeschleunigungen während der jeweiligen Meßphase überprüft wird und nur dann die den in X- und Y-Richtung ermittelten Beschleunigungswerten entsprechenden Signale zur Bildung von Beschleunigungsspektren, welche die Umfangskraft und die Radlast des jeweiligen Fahrzeugrades charakterisieren, herangezogen werden, wenn etwaig ermittelte Winkelbeschleunigungen unter einer vorgegebenen Toleranzgrenze liegen.

3. Verfahren nach Anspruch 1 oder 2 bei dem die in X- und Y-Richtung ermittelten Beschleunigungswerte der einzelnen Fahrzeugräder miteinander verglichen und nur dann die diesen Beschleunigungswerten entsprechenden Signale zur Bildung von Beschleunigungsspektren, die Umfangskraft und Radlast eines jeden Fahrzeugrades charakterisieren, herangezogen und einer Auswertung unterworfen werden, wenn die Beschleunigungswerte wenigstens eines Fahrzeugrades sich von den Beschleunigungswerten der anderen Fahrzeugräder signifikant unterscheiden.

4. Verfahren nach Anspruch 2 oder 3, bei dem im Falle des Auftretens von Winkelbeschleunigungen während der jeweiligen Meßphase, die eine vorgegebene Toleranzgrenze überschreiten und/oder beim Fehlen signifikanter Unterschiede zwischen den Beschleunigungswerten der Fahrzeugräder die ermittelten Beschleunigungswerte für jedes Fahrzeugrad gesondert in einem Langzeitspeicher abgespeichert werden.

5. Verfahren nach einem der Ansprüche 1 bis 4, dadurch gekennzeichnet, daß neben den im Fahrbetrieb in einer zur Fahrbahn parallelen Ebene in Fahrtrichtung (X-Richtung) und etwa rechtwinklig dazu vertikal (Y-Richtung) auftretenden Beschleunigungen auch die Beschleunigungen in einer Parallelebene zur Fahrbahn quer zur Fahrtrichtung (Z-Richtung) für jedes Fahrzeugrad gesondert ermittelt, die insoweit während einer vorbestimmten Zeitdauer (t) ermittelten Beschleunigungswerte der einzelnen Fahrzeugräder in Signale umgewandelt und mit Hilfe gleichzeitig bestimmter Geschwindigkeitssignale Beschleunigungsspektren gebildet sowie die unter den Beschleunigungsspektren der einzelnen Fahrzeugräder in X-, Y-und Z-Richtung gebildeten Flächen durch Vergleich miteinander ausgewertet werden und daß beim Auftreten signifikanter Abweichungen an wenigstens einem Fahrzeugrad ein Signal zur Anzeige der Ursache für das ermittelte abnormale Schwingungsverhalten ausgelöst und zur Anzeige gebracht wird.

6. Verfahren nach Anspruch 5, dadurch gekennzeichnet, daß die Auswertung der an den einzelnen Rädern in X-, Y-und Z-Richtung ermittelten Beschleunigungsspektren durch Vergleich der von letzteren gebildeten Flächen mittels einer Suchmatrix

$$\begin{Bmatrix} Q_1 \\ Q_2 \\ Q_3 \\ Q_4 \end{Bmatrix} = \begin{Bmatrix} q_{11}=1 & q_{12} & q_{13} & q_{14} \\ q_{21} & q_{22}=1 & q_{23} & q_{24} \\ q_{31} & q_{32} & q_{33}=1 & q_{34} \\ q_{41} & q_{42} & q_{43} & q_{44}=1 \end{Bmatrix}$$

erfolgt, wobei $q_{ik} = A_i / A_k$ die Quotienten der Flächen $A_i$, $A_k$ der an den Rädern i, k in jeweils einer Richtung ermittelten Beschleunigungsspektren bedeuten und ein durch Verkleinerung der Fläche $A_i$ eines Rades i im Verhältnis zur entsprechenden Flache $A_k$ eines Rades k angezeigter Abfall der Schwingungsstärke des erstgenannten Rades zu Quotienten $q_{ik} = A_i / A_k < 1$ und $q_{ki} = A_k / A_i > 1$ und damit zu einer Aussage über die Ursache für den Abfall der Schwingungsstärke am Rad i im Verhältnis zum Rad k führt.

7. Verfahren nach Anspruch 6, dadurch gekennzeichnet, daß die Auswertung der an den einzelnen Rädern in X-, Y- und Z-Richtung ermittelten Beschleunigungsspektren durch den Vergleich signifikanter Teilflächen der Spektren mittels einer aus Quotienten dieser Teilflächen gebildeten Suchmatrix erfolgt.

8. Vorrichtung zum Durchführen des Verfahrens nach einem der Ansprüche 1 bis 4, bei der

- im Bereich der Lagerung und/oder Aufhängung eines jeden Fahrzeugrades (1, 2) und (3, 4) je ein Sensor (5, 6) für die Aufnahme auftretender Beschleunigungen in horizontaler (X-) und vertikaler (Y-) Richtung angeordnet sind,
- ein Signalgeber (7) zur Bestimmung der Winkelgeschwindigkeit und der Winkelbeschleunigung an zumindest einem Fahrzeugrad vorhanden ist.
- ein Prozessor (12) zum Verarbeiten der von den Sensoren (5, 6) kommenden Signale getrennt nach Radsystem und in X- und Y-Richtung auftretenden Beschleunigungen vorgesehen und dem Prozessor (12),
- eine Anzeigeeinrichtung (14) mit einer Anzeige (15, 6) und (17, 18) für jedes Radsystem und je eine Fehleranzeige (20, 21, 22, 23) für jede überwachte Funktion (wie Wuchtzustand, Stoßdämpfer, Reifenluftdruck) nachgeschaltet ist.

9. Vorrichtung nach Anspruch 8 zum Durchführen des Verfahrens nach einem der Ansprüche 5 bis 7, dadurch gekennzeichnet, daß im Bereich der Lagerung und/oder Radaufhängung eines jeden Fahrzeugrades neben je einem Sensor (5, 6) für die Aufnahme auftretender Beschleunigungen in Fahrtrichtung (X-Richtung) und vertikal dazu (Y-Richtung) ein Beschleunigungen in einer Parallelebene zur Fahrbahn und quer zur Fahrtrichtung (Z-Richtung) erfassender Sensor (25) angeordnet und ein Prozessor (12) zum Verarbeiten der Signale getrennt nach Radsystem und in X-, Y- und Z-Richtung auftretenden Beschleunigungen vorgesehen und diesem Prozessor eine Anzeigeeinrichtung (14) mit einer Anzeige (15, 16) und (17, 18) für jedes Radsystem und je eine Fehleranzeige (20, 21, 22, 23) für jede überwachte Funktion nachgeschaltet ist.

Fig. 1

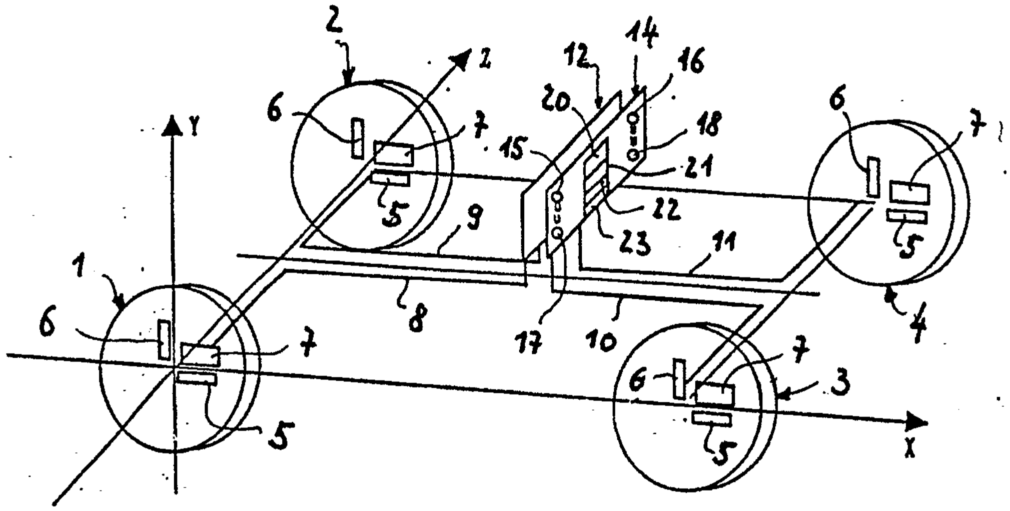
2
z
12
14
16
6
7
20
18
Y
15
21
6
7
22
5
9
23
11
5
1
4
6
7
8
17
10
7
6
3
5
5
x

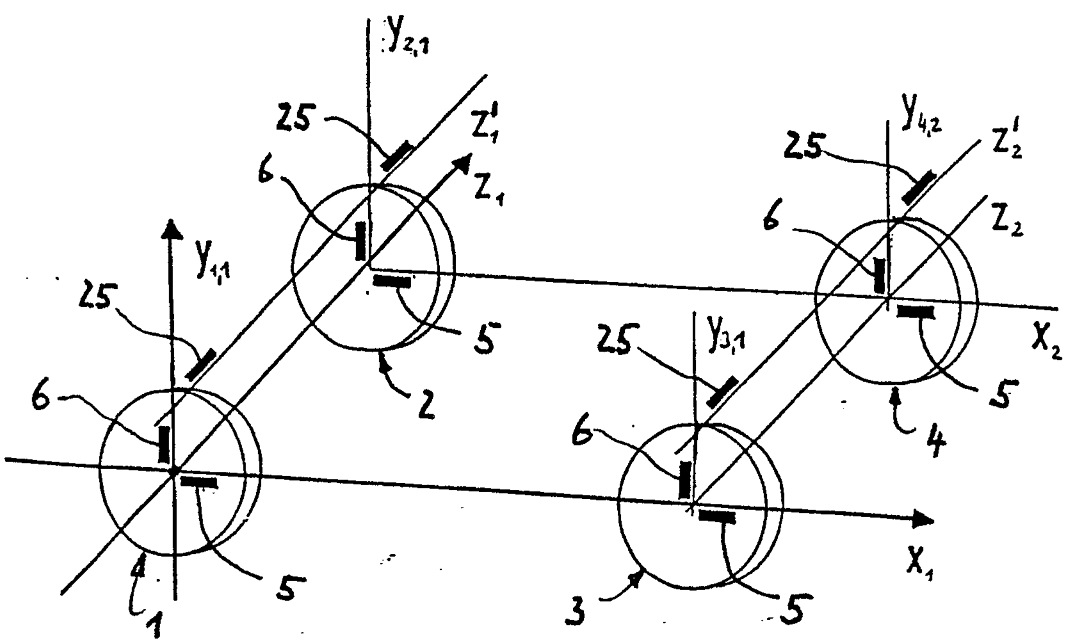
$y_{2,1}$
25
$z_1'$
$y_{4,2}$
$z_2'$
25
6
$z_1$
6
$z_2$
$y_{1,1}$
25
5
$y_{3,1}$
25
$x_2$
6
2
5
6
4
5
$x_1$
1
3
5

Fig. 2

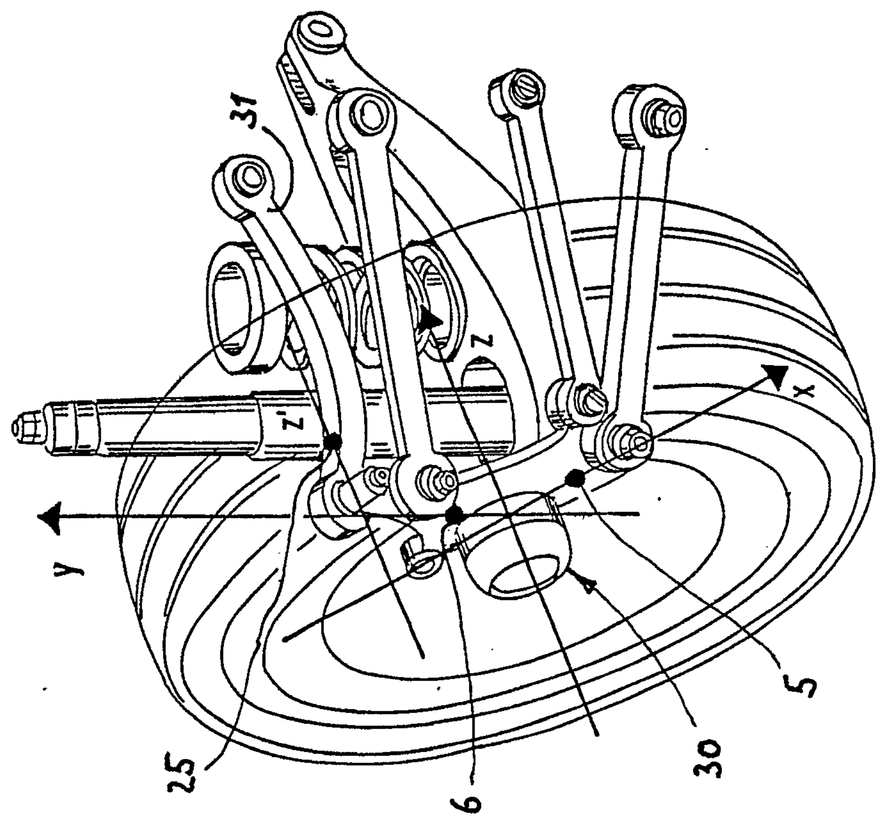


Fig. 4

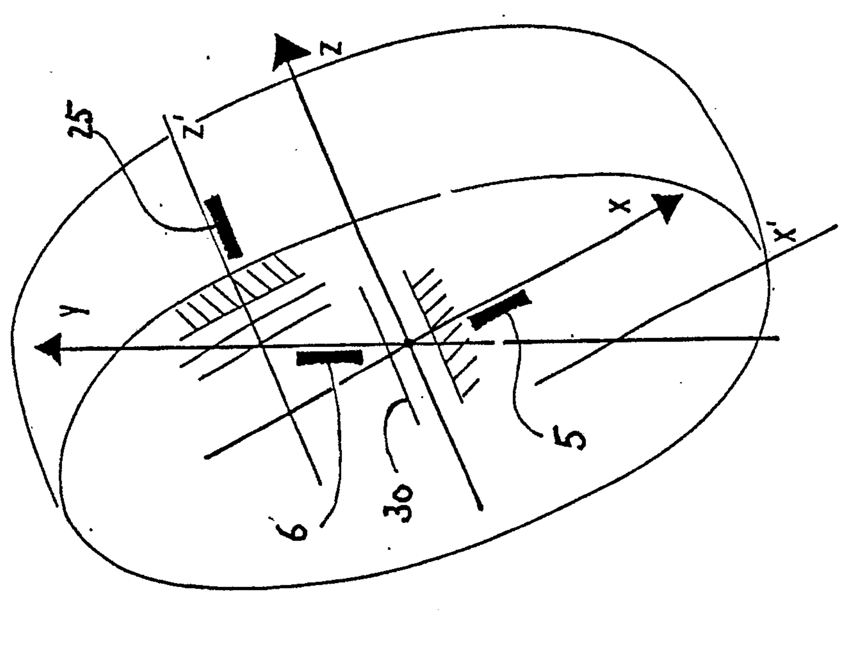


Fig. 3

Fig. 5

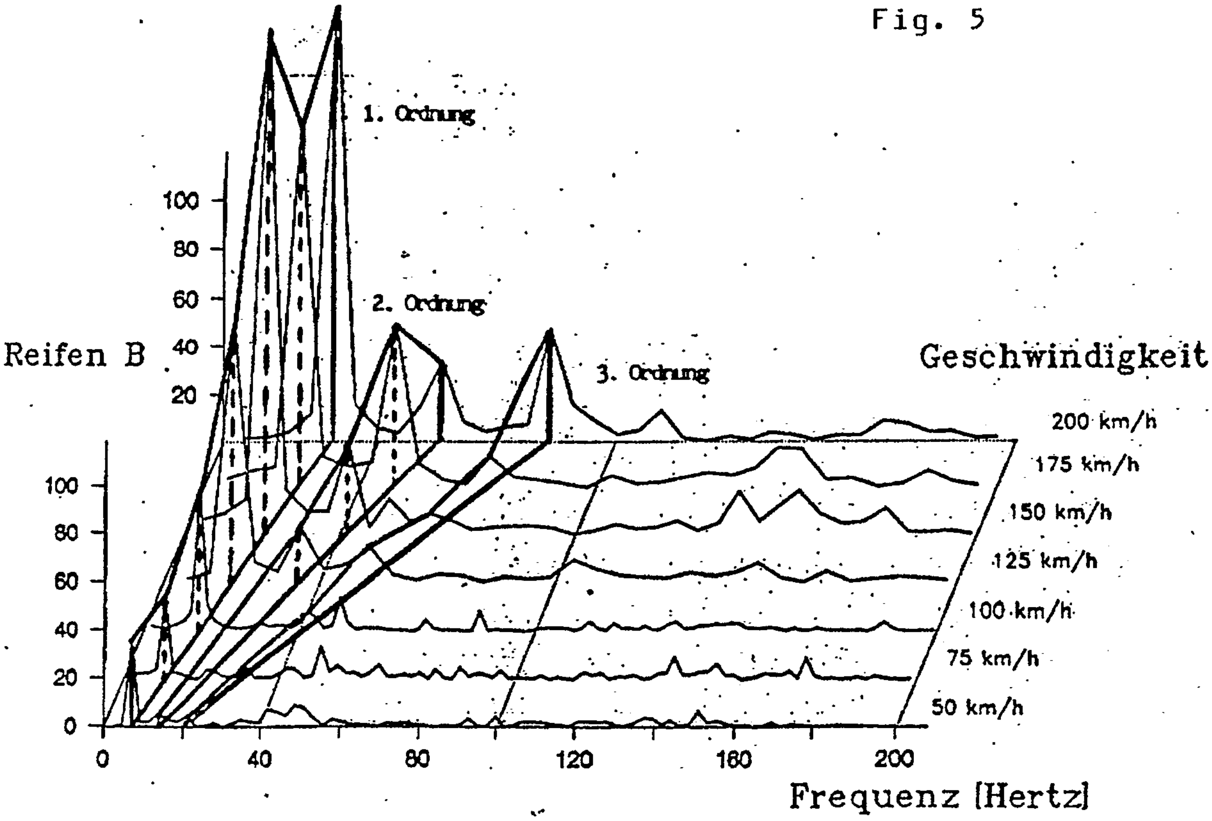
1. Ordnung
2. Ordnung
3. Ordnung
Reifen B
Geschwindigkeit
200 km/h
175 km/h
150 km/h
125 km/h
100 km/h
75 km/h
50 km/h
100
80
60
40
20
0
0
40
80
120
160
200
Frequenz [Hertz]

Fig. 6

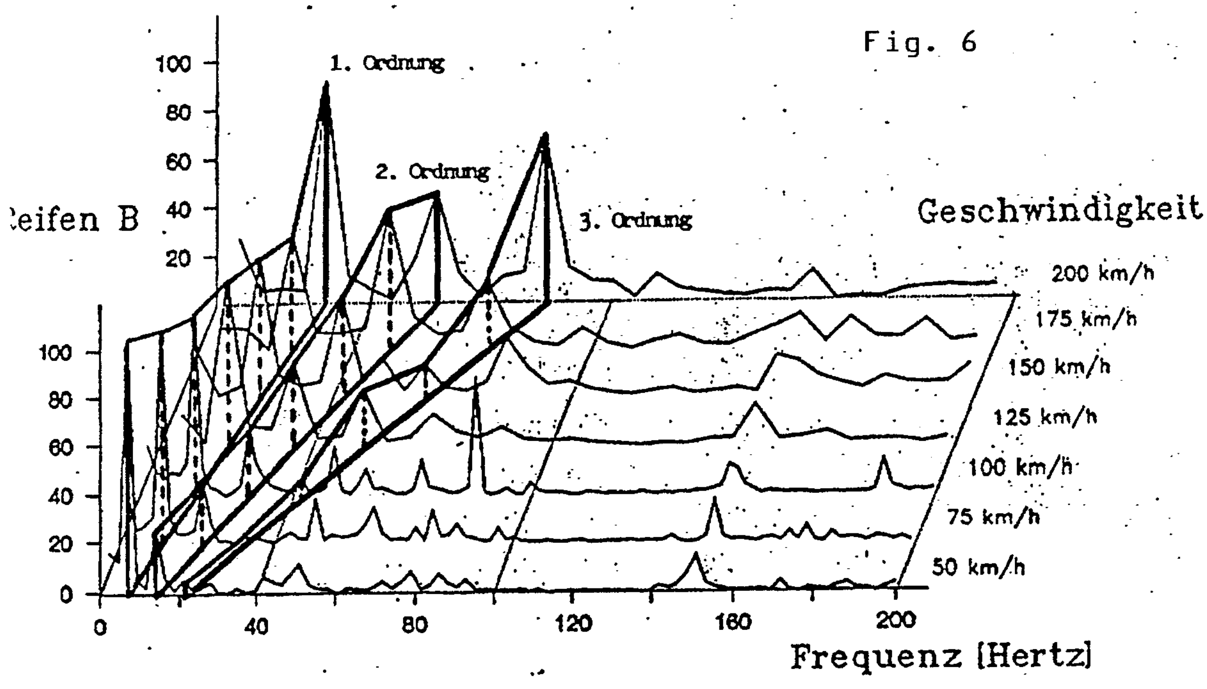
1. Ordnung
2. Ordnung
3. Ordnung
Reifen B
Geschwindigkeit
200 km/h
175 km/h
150 km/h
125 km/h
100 km/h
75 km/h
50 km/h
100
80
60
40
20
0
0
40
80
120
160
200
Frequenz [Hertz]

Fig. 7

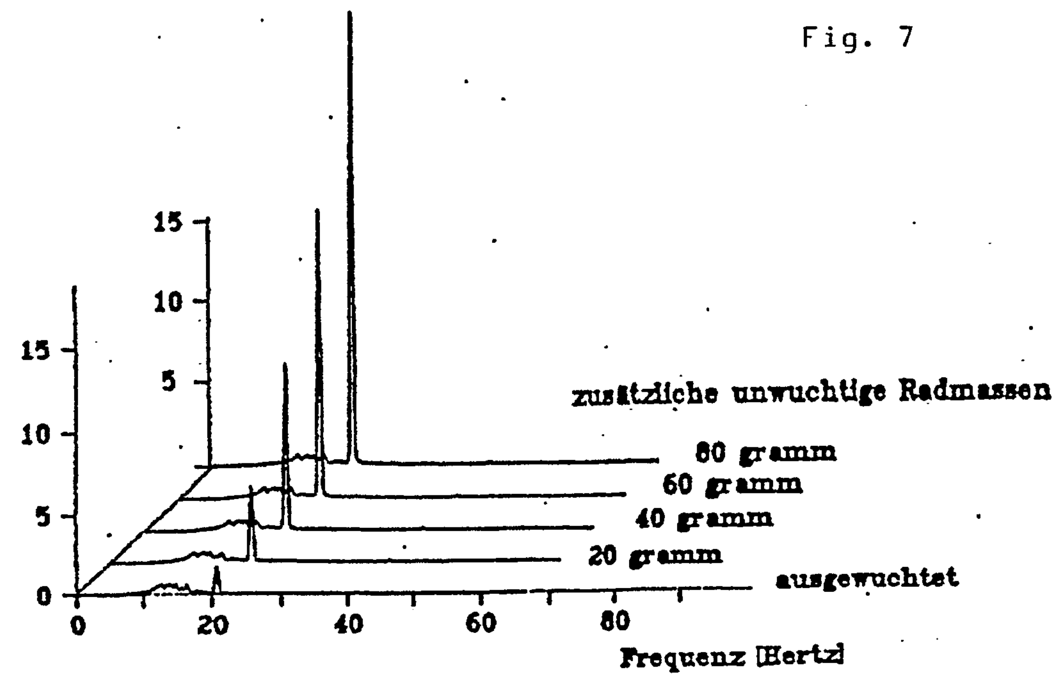
15
10
5
0
15
10
5
zusätzliche unwuchtige Radmassen
80 gramm
60 gramm
40 gramm
20 gramm
ausgewuchtet
0
20
40
60
80
Frequenz [Hertz]

Fig. 8

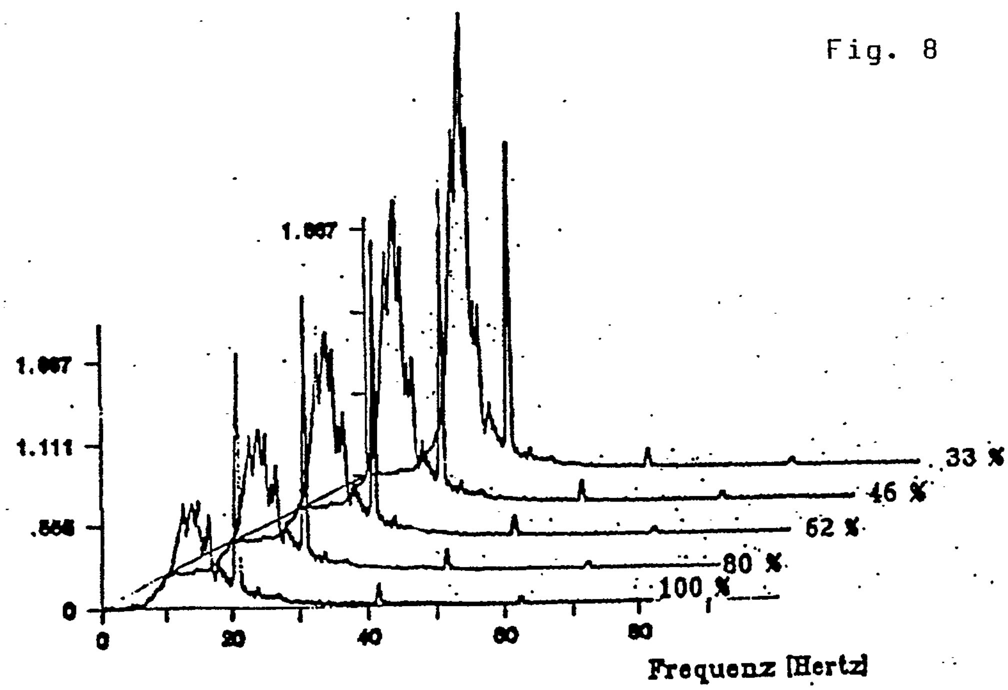
1.667
1.111
.556
0
33 %
46 %
62 %
80 %
100 %
0
20
40
60
80
Frequenz [Hertz]

Fig. 9

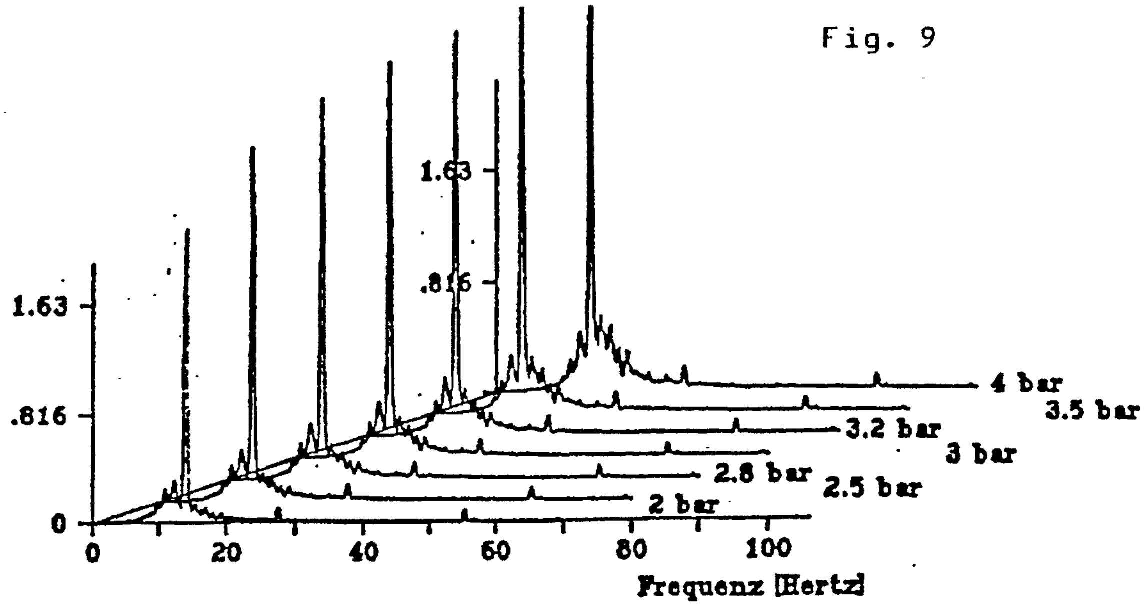
1.63
.816
0
1.63
.816
0
20
40
60
80
100
Frequenz [Hertz]
4 bar
3.5 bar
3.2 bar
3 bar
2.8 bar
2.5 bar
2 bar

Fig. 10

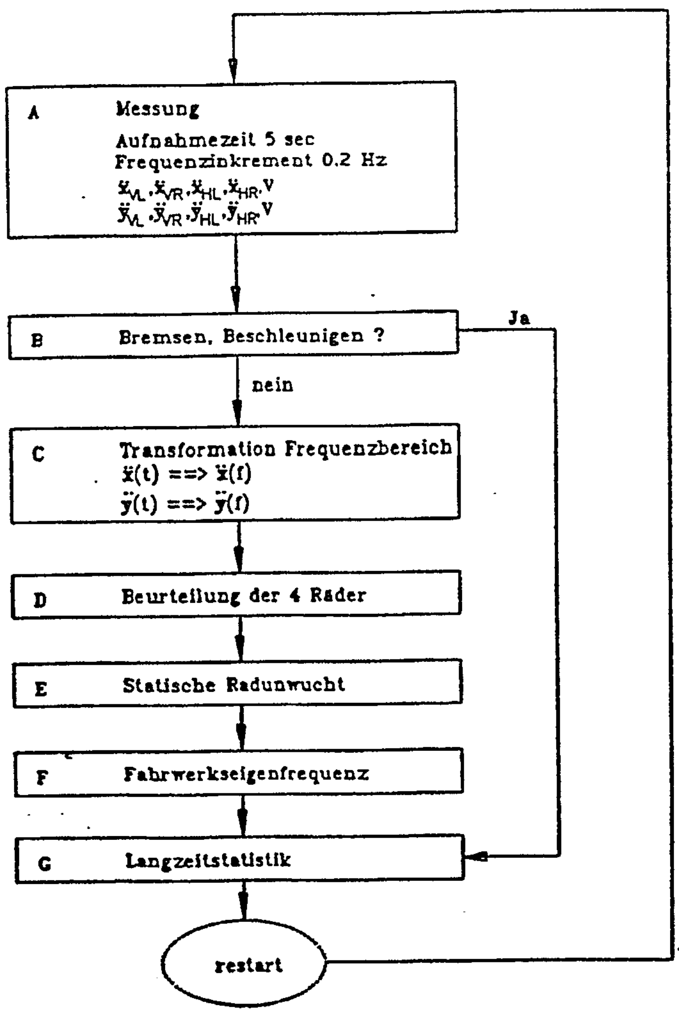
A
Messung
Aufnahmezeit 5 sec
Frequenzinkrement 0.2 Hz
$\ddot{x}_{VL}, \ddot{x}_{VR}, \ddot{x}_{HL}, \ddot{x}_{HR}, V$
$\ddot{y}_{VL}, \ddot{y}_{VR}, \ddot{y}_{HL}, \ddot{y}_{HR}, V$
B
Bremsen, Beschleunigen ?
Ja
nein
C
Transformation Frequenzbereich
$\ddot{x}(t) ==> \ddot{x}(f)$
$\ddot{y}(t) ==> \ddot{y}(f)$
D
Beurteilung der 4 Räder
E
Statische Radunwucht
F
Fahrwerkseigenfrequenz
G
Langzeitstatistik
restart